# EUROPÄISCHE PATENTSCHRIFT

(11) **EP 3 692 273 B1**
(45) Veröffentlichungstag und Bekanntmachung des Hinweises auf die Patenterteilung: **01.03.2023**
(21) Anmeldenummer: 18789333.4
(22) Anmeldetag: 05.10.2018
(51) Int. Cl.: F16D 1/08, F16D 3/06, F16F 15/12, A01B 71/06

(54) **KUPPLUNGSSYSYTEM**
COUPLING SYSTEM
SYSTÈME DE COUPLAGE

(30) Priorität: 06.10.2017 DE 102017217845
(43) Veröffentlichungstag der Anmeldung: 12.08.2020
(73) Patentinhaber: KNORR-BREMSE Systeme für Nutzfahrzeuge GmbH, 80809 München (DE)
(72) Erfinder: SCHALLER, Sebastian, 86462 Langweid (DE)
(86) Internationale Anmeldenummer: PCT/EP2018/077104
(87) Internationale Veröffentlichungsnummer: WO 2019/068853

(56) Entgegenhaltungen:
- EP-A2- 1 260 725
- US-A- 1 951 288
- US-A- 2 468 182
- US-A- 2 977 777

## Beschreibung

Die Erfindung betrifft ganz allgemein ein Schwingungsentkopplungssystem, insbesondere ein Schwingungsentkopplungssystem zur Verwendung in einem Antriebsstrang eines Fahrzeugs.

Fahrzeuge sind oft mit einem Verbrennungsmotor versehen, der über einen Antriebsstrang mit Antriebsrädern verbunden ist. Um den Verbrennungsmotor, beispielsweise bei einem Anhalten des Fahrzeugs, von den Antriebsrädern trennen zu können, ist bekannterweise eine Kupplung im Antriebsstrang des Fahrzeugs vorgesehen. Die Kupplung wird, insbesondere bei Personenkraftwagen, häufig über einen Bowdenzug betätigt, der mit einem Kupplungspedal für den Fahrer verbunden ist. Alternativ verbaute selbstschaltende Kupplungen sind hingegen mit einer speziellen Aktuatorik versehen.

Die Europäische Patentanmeldung EP 1 260 725 A2 offenbart eine elastische Wellenkupplung und ein Verfahren zum Herstellen einer elastischen Buchse, um einen Versatz in einer axialen Richtung aufzufangen, wobei eine hohe Drehsteifigkeit bereitgestellt wird.

Im Dokument US 1,951,288 A ist eine Halterung für Wasserpumpen offenbart, wobei ein Spiel zwischen einer Riemenscheibe als Antrieb und der Wasserpumpe mittels einer Wellenkupplung zur Übertragung eines Drehmoments verhindert wird, da die Wellenkupplung eine Feder aufweist, um die Welle vorzuspannen.

Dokument US 2,977,777 A zeigt eine Wellenkupplung zwischen einem Verbrennungsmotor und einer angetriebenen Einheit, wobei die Wellenkupplung eine Spannung in der Antriebswelle aufgrund von Ausdehnen und Zusammenziehen des Verbrennungsmotors verhindert.

Dokument US 2,468,182 A offenbart eine Kraftübertragungseinrichtung für Lastkraftwagen, wobei eine erste Antriebswelle einen gefedert einschiebbaren Mitnehmer aufweist, so dass eine Verbindung manuell getrennt und hergestellt werden kann, ohne den Antrieb und das angetriebene Teil zu bewegen, und eine zweite Antriebswelle ebenfalls einen gefedert einschiebbaren Mitnehmer aufweist, um eine Verbindung eines Hilfsaggregats mit dem Antrieb manuell zu trennen und herzustellen.

Während der Fahrt treten aber in dem Antriebsstrang Schwingungen, nämlich ein sogenanntes Wobbling, auf, das sich auch auf die Kupplung überträgt. Bei Kupplungen, die mit Hilfe der speziellen Aktuatorik ein- und ausgekuppelt werden, beeinträchtigt dieses Wobbling jedoch die Aktuatorik, was zu deren Verschleiß führt, der sich wiederum negativ auf Komponenten der Kupplung auswirkt.

Es ist die der Erfindung zugrundeliegende Aufgabe, ein Schwingungsentkopplungssystem bereitzustellen, das eine Schwingungsübertragung verhindert.

Die Aufgabe wird durch ein Kupplungssystem gemäß Anspruch 1 gelöst. Vorteilhafte Weiterentwicklungen sind Gegenstand der abhängigen Ansprüche.

Gemäß einem Aspekt der Erfindung ist ein Schwingungsentkopplungsglied zwischen einem Verstellelement und einer Aktuatorik vorgesehen. Dieses Schwingungsentkopplungsglied verbindet ein Wirkelement der Aktuatorik und das Verstellelement, wobei das Schwingungsentkopplungsglied als eine in der vorbestimmten Wirkrichtung spielbehaftete Verbindung ausgebildet ist, was bedeutet, dass es einen vorbestimmten Spielbereich aufweist, in dem sich entweder das Wirkelement oder das Verstellelement bewegt, ohne dass sich das jeweils andere Bauelement mitbewegt. Somit können Schwingungen, die in dem Verstellelement auftreten, von der Aktuatorik ferngehalten werden und auch Schwingungen in der Aktuatorik können von dem Verstellelement ferngehalten werden. Die Schwingungen werden zwar bis zu einem mit dem Verstellelement verbundenen Verbindungselement des Schwingungsentkopplungsglieds übertragen, werden aber aufgrund eines definierten Spiels in der Verbindung in einer Wirkrichtung eines Wirkelements der Aktuatorik nicht darauf übertragen.

Im Falle einer Anwendung für eine Kupplung eines Fahrzeugs enthält das Verstellelement beispielsweise einen Ausrückhebel, eine Druckplatte und eine Kupplungsscheibe und ist vorteilhafterweise zumindest annähernd spielfrei ausgebildet. Dadurch können definierte Verhältnisse geschaffen werden, um Kupplungsvorgänge über die Aktuatorik präzise durchzuführen, so dass Schaltoder Anfahrvorgänge reibungslos ablaufen.

Dazu weist das Verstellelement vorteilhafterweise zumindest ein Federelement auf, das ausgebildet ist, ein Spiel in einer Aus- und Einrückrichtung in dem Verstellelement zu eliminieren. Dadurch kann die Spielfreiheit in dem Verstellelement auch bei dimensionalen Veränderungen aufgrund von Verschleiß oder thermischen Ausdehnungen gewährleistet werden.

Vorteilhafterweise wirkt das Wirkelement der Aktuatorik im betätigten Zustand der Aktuatorik direkt auf das Verstellelement. Dadurch ist es möglich, das Schwingungsentkopplungsglied mit einfachen Mitteln kostengünstig und betriebssicher auszuführen.

Wenn das Schwingungsentkopplungsglied vorteilhafterweise ein Rohr entweder an dem Verstellelement oder dem Wirkelement aufweist, wobei das Rohr mit mindestens einer in der Rohrwand befindlichen sich axial erstreckendend radialen Nut versehen ist, und das andere von dem Verstellelement und dem Wirkelement ein Nasenelement aufweist, wobei das Nasenelement eine in axialer Richtung spielbehaftet radial in die Nut eingreifenden Nase aufweist, kann das Schwingungsentkopplungsglied bei einem einfachen Aufbau sowohl eine Druck- als auch eine Zugkraft übertragen.

Alternativ dazu weist das Schwingungsentkopplungsglied vorteilhafterweise ein Rohr oder ein rohrähnliches Element mit mindestens einem sich in Axialrichtung in der Umfangswand erstreckenden Langloch auf. Das Rohrinnere ist mit dem Wirkelement der Aktuatorik oder dem Verbindungselement des Schwingungsentkopplungsglieds, das mit dem Verstellelement verbunden ist, komplementär ausgebildet. Das Schwingungsentkopplungsglied weist ferner einen radialen Stift auf, der in das Langloch eingreift und damit zusammenwirkt, um eine Kraft zu übertragen. Durch diesen Aufbau kann das Schwingungsentkopplungsglied mit einfachen Mitteln kostengünstig und betriebssicher ausgeführt werden und eine Kraftübertragung ist in beiden Richtungen möglich.

Bei einer vorteilhaften Ausführung mit zwei sich diametral gegenüberliegenden Langlöchern und dem Stift kann eine größere Kraft von der Aktuatorik zu dem Verstellelement über den Stift und die Langlöcher einfach und kostengünstig übertragen werden.

Bei einem vorteilhaften direkten oder indirekten Anliegen des Stifts an einem Ende des Langlochs oder der Langlöcher können die Kräfte einfach und kostengünstig übertragen werden.

Wenn das Schwingungsentkopplungsglied vorteilhafterweise alternativ oder zusätzlich zu der Kraftübertragung von dem Stift auf das mindestens eine Langloch mit zumindest einem Flansch versehen ist und der zumindest eine Flansch ausgebildet ist, eine Kraft von der Aktuatorik zu dem Verstellelement zu übertragen, können auch größere Kräfte betriebssicher übertragen werden.

Bei einem vorteilhaften Vorsehen von mindestens einem weiteren Federelement in dem Schwingungsentkopplungsglied, wobei das mindestens eine weitere Federelement ausgebildet ist, die spielbehaftete Verbindung in seiner Wirkrichtung vorzuspannen, kann eine Geräuschbildung durch eine relative Bewegung zwischen dem mit dem Verstellelement verbundenen Verbindungselement des Schwingungsentkopplungsglieds und dem Wirkelement verhindert werden.

Bei einem vorteilhaften Vorsehen von mindestens einem dämpfenden Element in dem Schwingungsentkopplungsglied, wobei das mindestens eine dämpfende Element ausgebildet ist, einen durch die spielbehaftete Verbindung ermöglichte Bewegung zu dämpfen, besteht die Möglichkeit, die in dem Verstellelement auftretenden Schwingungen zu dämpfen, um dort entstehenden Verschleiß zu verringern.

Wenn die Aktuatorik vorteilhafterweise einen elektrischen Linearantrieb als Aktuator aufweist, kann eine präzise Ansteuerung der Aktuatorik, und somit bei einer Verwendung in einer Kupplung eine präzise Ansteuerung der Kupplung ermöglicht werden.

Wenn die Aktuatorik alternativ vorteilhafterweise mit einem Hydraulikzylinder als Aktuator versehen ist, kann eine von einem hydraulischen Stellglied initiierte Bewegung des Hydraulikzylinders ohne Kompressionseffekte des übertragenden Mediums umgesetzt werden.

Bei einem alternativen vorteilhaften Einsatz eines Pneumatikzylinders als Aktuator wird eine Wirkkraft der Aktuatorik kostengünstig erzeugt.

Vorteilhafterweise wird das Schwingungsentkopplungssystem in einem Fahrzeug, einem Nutzfahrzeug, einem Getriebe oder einer Kupplung eingesetzt, so dass die Schwingungen jeweils nicht übertagen werden können.

Die Erfindung wird nun anhand eines Ausführungsbeispiels unter Bezugnahme auf die beigefügte Zeichnung erläutert.

Insbesondere zeigt:
- Fig. 1: eine schematische Darstellung eines Kupplungssystems mit einem erfindungsgemäßen Schwingungsentkopplungssystem;
- Fig. 2: eine schematische Darstellung eines weiteren Kupplungssystems mit einer anderen Ausführungsform des Schwingungsentkopplungssystems; und
- Fig. 3.: ein Kupplungssystem mit einer anderen Ausprägung der in Fig. 2 gezeigten Ausführungsform.

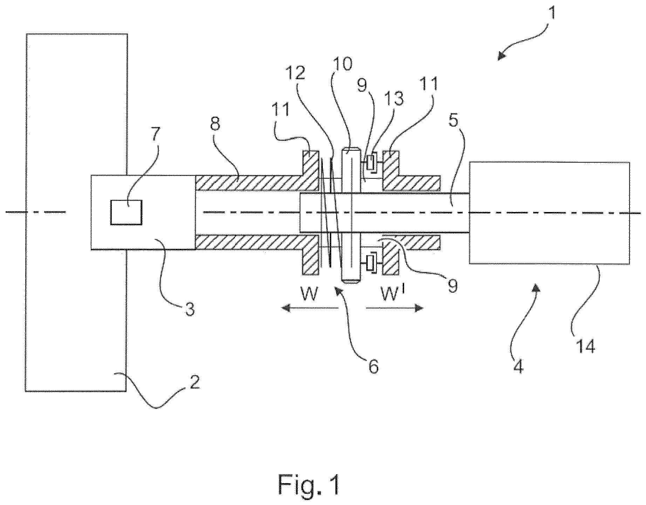

In **Fig. 1** ist ein Kupplungssystem für einen Antriebsstrang eines Fahrzeugs mit einem erfindungsgemäßen Schwingungsentkopplungssystem 1 schematisch dargestellt.

Das Kupplungssystem weist eine Kupplung 2 zum Trennen und Verbinden eines Kraftflusses in dem Antriebsstrang auf. In dem Kupplungssystem ist ferner eine Ausrückmechanik für die Kupplung 2, die zum Ein- und Auskuppeln der Kupplung 2 dient, als ein Verstellelement 3 vorgesehen. Außerdem weist das Kupplungssystem eine Kupplungsaktuatorik als Aktuatorik 4 auf.

Die Aktuatorik 4 ist mit einem Wirkelement 5 versehen. Das Wirkelement 5 ist beispielsweise eine Kugelumlaufspindel einer elektrischen Lineareinheit oder eine Kolbenstange eines Hydraulik- oder Pneumatikzylinders und führt eine erste Wirkbewegung zum Betätigen des Verstellelements 3 in einer vorbestimmten Wirkrichtung W und eine zweite Wirkbewegung einer Richtung W' entgegen der Wirkrichtung W aus.

Das Schwingungsentkopplungssystem 1 ist darüber hinaus mit einem Schwingungsentkopplungsglied 6 versehen. Das Schwingungsentkopplungsglied 6 verbindet das Wirkelement 5 der Aktuatorik 4 und das Verstellelement 3 für die Kupplung 2. Das Schwingungsentkopplungsglied 6 ist in der vorbestimmten Wirkrichtung der Aktuatorik 4 als eine spielbehaftete Verbindung ausgebildet. Spielbehaftet bedeutet in diesem Zusammenhang, dass Bewegungen innerhalb eines Spielbereichs in den Wirkrichtungen W, W' durch das Verstellelement 3 ausgeführt werden können, ohne dass sich diese Bewegungen auf die Aktuatorik 4 übertragen, also dass es einen vorbestimmten Spielbereich aufweist, in dem sich das Wirkelement 5 oder das Verstellelement 3 bewegt, ohne dass sich das jeweils andere mitbewegt. Diese Bewegungen können beispielsweise die Schwingungen sein, die in dem Antriebsstrang auftreten, nämlich das sogenannte Wobbling, die aber durch das Vorsehen des Schwingungsentkopplungsglieds 6 nicht auf die Aktuatorik 4 übertragen werden. Eine Dimension des Spielbereichs ist von der konstruktiven Ausführung des Kupplungssystems abhängig.

Das Verstellelement 3 ist ausgebildet, darin eine annähernde, oder alternativ vollständige, Spielfreiheit zu erreichen, so dass die Wirkbewegungen des Wirkelements 5 der Aktuatorik 4, die definiert über das Schwingungsentkopplungsglied 6 übertragen werden, definierte Zustände in der Kupplung 2 hervorrufen. Dabei ist es möglich, das Ein- und Auskuppeln der Kupplung 2 für einen Schaltvorgang eines nicht gezeigten Getriebes oder für ein Anfahren exakt zu steuern.

Das Verstellelement 3 ist mit mindestens einem schematisch dargestellten ersten Federelement 7 versehen. Durch dieses erste Federelement 7 ist es möglich, ein Spiel in dem Verstellelement 3 in einer Aus- und Einrückrichtung zu eliminieren, um die oben erwähnte Spielfreiheit zu erreichen.

Das Schwingungsentkopplungsglied 6 weist in dieser Ausführungsform ein in einer Schnittdarstellung gezeigtes Rohr 8 mit zwei Langlöchern 9 in einer Rohrwand in einer axialen Richtung des Rohrs 8 auf. In alternativen Ausführungsformen kann auch nur ein Langloch 9 oder können mehr als zwei Langlöcher 9 oder auch Senkungen in Form eines Langlochs an einer Innenwand des Rohrs 8 vorgesehen sein.

Das Wirkelement 5 ist komplementär zu einem Inneren des Rohrs 8 ausgeführt. Die komplementäre Ausführung bedeutet hier, dass das Wirkelement 5 im Inneren des Rohrs 8 aufnehmbar ist und gegebenenfalls durch das Rohr 8 geführt wird. Alternativ ist das Wirkelement 5 als Rohr ausgebildet und das mit der Kupplung 2 verbundene Verbindungselement ist zu dem Rohr komplementär ausgeführt. In weiteren alternativen Ausführungsformen weist das Schwingungsentkopplungsglied 6 kein Rohr auf, sondern beispielsweise eine lineare Gleit- oder Wälzlagerung, über die das Spiel in der Wirkrichtung in dem Schwingungsentkopplungsglied 6 realisiert wird.

Das Wirkelement 5 weist einen Stift 10 auf, der sich in dem Wirkelement 5 radial nach außen, also quer zur Achsrichtung, erstreckt. Der Stift 10 wirkt mit den Langlöchern 9 zusammen, indem der Stift 10 in die Langlöcher 9 eingreift. An den Enden der Langlöcher 9 sind sich nach außen erstreckende Flansche 11 vorgesehen, so dass der Stift in den Langlöchern 9 an der Rohrwand und gleichzeitig an den Flanschen 11 anliegt, um die Kräfte in den Wirkrichtungen W, W' von der Aktuatorik 4 zu der Ausrückmechanik 3 zu übertragen, um auch größere Kräfte betriebssicher übertragen zu können . In alternativen Ausführungsformen erstecken sich die Langlöcher 9 in axialer Richtung über die Flansche 11 hinaus, so dass die Kräfte nur über die Flansche 11 übertragen werden, oder es ist zumindest an einem Ende des Langlochs kein Flansch 11 vorgesehen, so dass die Kräfte nicht über die Flansche 11, sondern nur durch die Enden der Langlöcher 9 übertragen werden.

Das Schwingungsentkopplungsglied 6 ist mit einem zweiten Federelement 12 versehen. Das zweite Federelement 12 ist als eine Schraubenfeder ausgebildet und so angeordnet, dass es eine Federkraft zwischen dem Rohr 8 und dem Stift 10 in einer der Wirkrichtungen W, W' ausübt, um ein freies Spiel in dem Schwingungsentkopplungsglied 6 zu verringern oder zu eliminieren. Dazu stützt sich das Federelement 12 an dem Flansch 11 und dem Stift 10 und/oder dem Wirkelement 5 ab. Alternativ kann sich das Federelement 12 auch an einer anderen Stelle an dem Rohr 8 abstützen und es können auch mehrere Federelement 12 vorgesehen sein, die in entgegengesetzten Wirkrichtungen W, W' wirken. In weiteren alternativen Ausführungsformen ist das Federelement 12 in einer anderen Bauform, beispielsweise als Tellerfeder ausgebildet, oder es ist auch kein zweites Federelement 12 in dem Schwingungsentkopplungsglied 6 vorhanden.

Das Schwingungsentkopplungsglied 6 ist ferner mit einem Dämpfungsglied 13 versehen. Das Dämpfungsglied 13 ist so angeordnet, dass es eine Dämpfungswirkung zwischen dem Rohr 8 und dem Stift 10 und/oder dem Wirkelement 5 in einer der Wirkrichtungen W, W' ausübt. Dazu stützt sich das Dämpfungsglied 13 an dem Flansch 11 und dem Stift 10 ab. Alternativ kann sich das Dämpfungsglied 13 auch an einer anderen Stelle an dem Rohr 8 abstützen und es können auch mehrere Dämpfungsglieder 13 vorgesehen sein, die in beiden Wirkrichtungen W, W' oder nur ein einer Richtung wirken. In einer weiteren alternativen Ausführungsform ist kein Dämpfungsglied 13 in dem Kopplungsglied 6 vorhanden.

Die Aktuatorik 4 weist als Aktuator 14 einen elektrischen Linearantrieb auf, der, von einer nicht gezeigten Steuerungsvorrichtung angetrieben, einen Kupplungsvorgang ausführt. In alternativen Ausführungsformen kann der Aktuator 14 auch als Hydraulikzylinder oder Pneumatikzylinder ausgeführt sein.

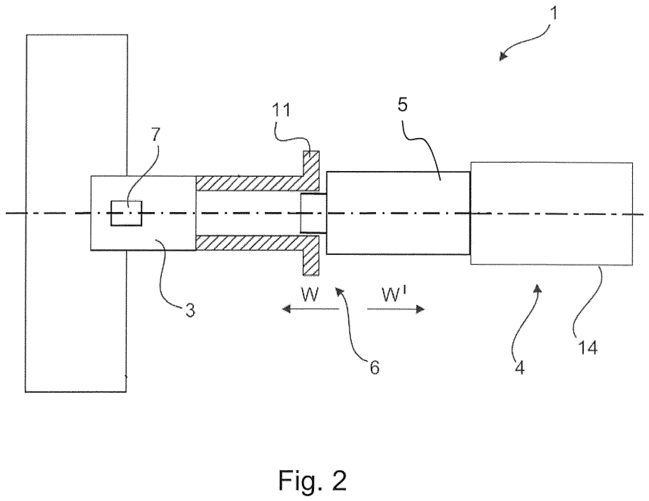

In **Fig. 2** ist ein Kupplungssystem mit einer anderen Ausführungsform des Schwingungsentkopplungssystems 1 gezeigt.

Das Schwingungsentkopplungsglied 6 wird in dieser Ausführungsform des Schwingungsentkopplungssystems 1 durch das Wirkelement 5 der Aktuatorik 4 und einem rohrförmigen Ende des Verstellelements 3 gebildet. Dadurch wirkt das Wirkelement 5 direkt auf das Verstellelement 3, wenn die Aktuatorik 4 durch den Aktuator 14 betätigt wird.

In Fig. 2 ist gezeigt, dass das Wirkelement 5 mit einem Absatz versehen ist, der mit dem rohrförmigen Ende des Verstellelements 3 komplementär ausgebildet ist, so dass das Wirkelement 5 in dem Verstellelement 3 in den Wirkrichtungen W, W' geführt wird. Dies ist aber nicht zwingend erforderlich, da eine Führung des Wirkelements 5 in dem Verstellelement 3 nicht obligatorisch ist. Ein bloßes spielbehaftetes Aneinanderstoßen des Wirkelements 5 und des Verstellelements 3 oder eine andere Art einer spielbehafteten Verbindung ist alternativ ebenfalls möglich.

Obwohl in Fig. 2 nicht dargestellt, kann das Schwingungsentkopplungsglied 6 optional auch in dieser Ausführungsform des Schwingungsentkopplungssystems 1 mit dem zweiten Federelement oder dem Dämpfungsglied versehen sein.

Das Ende des Verstellelements 3 ist in Fig. 2 mit dem Flansch 11 dargestellt. Dieser Flansch 11 ist aber nicht zwingend erforderlich, sofern eine Fläche zum Übertragen einer von der Aktuatorik 4 auf das Verstellelement 3 übertragenen Kraft ausreichend groß ist.

Das Verstellelement 3 ist auch in dieser Ausführungsform des Schwingungsentkopplungssystems 1 optional mit dem schematisch dargestellten ersten Federelement 7 versehen, durch das es möglich ist, das Spiel in dem Verstellelement 3 in der Aus- und Einrückrichtung zu eliminieren, um die oben erwähnte Spielfreiheit zu erreichen.

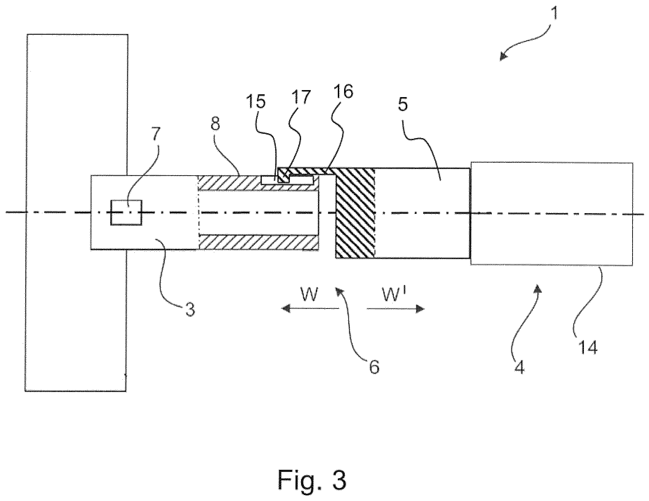

**Fig. 3** zeigt ein Kupplungssystem mit einer anderen Ausprägung der in Fig. 2 gezeigten Ausführungsform des Schwingungsentkopplungssystems 1.

Dieses Schwingungsentkopplungssystem 1 unterscheidet sich von dem in Fig. 2 gezeigten Schwingungsentkopplungssystem 1 darin, dass das Schwingungsentkopplungsglied 6 an dem Verstellelement 3 ein Rohr 8, das mit einer in der Rohrwand befindlichen sich axial erstreckendend radialen Nut 15 versehen ist, aufweist. Ferner weist das Wirkelement 5 ein Nasenelement 16 auf, wobei das Nasenelement 16 eine in axialer Richtung spielbehaftet radial in die Nut 15 eingreifenden Nase 17 aufweist. Alternativ kann auch das Wirkelement 5 das Rohr 8 aufweisen und das Verstellelement 3 mit dem Nasenelement 16 versehen sein. In einer weiteren Alternative sind mindestens zwei Nuten 15 mit einer entsprechenden Anzahl von Nasenelementen 16 vorgesehen.

Das Verstellelement 3 ist auch in dieser Ausprägung der Ausführungsform des Schwingungsentkopplungssystems 1 optional mit dem schematisch dargestellten ersten Federelement 7 versehen, durch das es möglich ist, das Spiel in dem Verstellelement 3 in der Aus- und Einrückrichtung zu eliminieren, um die oben erwähnte Spielfreiheit zu erreichen.

Obwohl auch in Fig. 3 nicht dargestellt, kann das Schwingungsentkopplungsglied 6 optional aber auch in dieser Ausprägung der Ausführungsform des Schwingungsentkopplungssystems 1 mit dem zweiten Federelement oder dem Dämpfungsglied versehen sein.

Im Betrieb werden die Schwingungen (das Wobbling) in dem Antriebsstrang in einem eingekuppelten Zustand durch das Spiel in dem Schwingungsentkopplungselement 6 von der Aktuatorik 4 entkoppelt. Dadurch tritt kein Verschleiß in der Aktuatorik 4 auf, der sich wiederum negativ auf die Kupplung 2 auswirken würde. Das Schwingungsentkopplungselement 6 ist so ausgebildet und eingebaut, dass das Wirkelement 5 gegenüber dem Verstellelement 3 bzw. dem Rohr 8 um eine Nulllage schwingt.

Beim Auskuppeln bewegen sich das Wirkelement 5 und das Verstellelement 3 bzw. das Rohr 8 relativ zueinander bis das Wirkelement 5 an dem Verstellelement 3 bzw. der Stift 10 an dem einen Ende des Langlochs 9 oder an einem der Flansche 11 direkt, oder gegebenenfalls über das zweite Federelement 12 und/oder das Dämpfungsglied 13 indirekt, anliegt und die von der Aktuatorik 4 ausgeübte Kraft an das Verstellelement 3 der Kupplung 2 überträgt. Durch diese vorbestimmte relative Zuordnung des Wirkelements 5 und des Verstellelements 3 bzw. des Rohrs 8 in dem ausgekuppelten Zustand kann eine definierte Wirkbewegung an das Verstellelement 3 übertragen werden.

Das Schwingungsentkopplungssystem 1 kann auch in der Kupplung 2, einem Getriebe, dem Fahrzeug oder einem Nutzfahrzeug eingesetzt werden.

### BEZUGSZEICHENLISTE

- 1: Schwingungsentkopplungssystem
- 2: Kupplung
- 3: Verstellelement
- 4: Aktuatorik
- 5: Wirkelement
- 6: Schwingungsentkopplungsglied
- 7: Federelement des Verstellelements
- 8: Rohr
- 9: Langloch
- 10: Stift
- 11: Flansch
- 12: Federelement des Schwingungsentkopplungsglieds
- 13: Dämpfungsglied
- 14: Aktuator
- 15: Nut
- 16: Nasenelement
- 17: Nase

- W, W': Wirkrichtung

## Patentansprüche

1. Kupplungssystem mit
einem Schwingungsentkopplungssystem, und
einer Kupplung (2),
wobei
das Schwingungsentkopplungssystem
ein Verstellelement (3),
eine Aktuatorik (4) mit einem Wirkelement (5), das ausgebildet ist, eine Wirkbewegung in einer vorbestimmten Wirkrichtung (W, W') zum Betätigen des Verstellelements (3) auszuführen, und
ein Schwingungsentkopplungsglied (6), das das Wirkelement (5) der Aktuatorik (4) und das Verstellelement (3) verbindet, aufweist, wobei das Schwingungsentkopplungsglied (6) in der vorbestimmten Wirkrichtung (W, W') eine spielbehaftete Verbindung bildet, die einen vorbestimmten Spielbereich aufweist, in dem sich das Wirkelement (5) oder das Verstellelement (3) bewegt, ohne dass sich das jeweils andere mitbewegt,
**dadurch gekennzeichnet, dass**
das Verstellelement (3) als eine Ausrückmechanik für die Kupplung (2), die zum Ein- und Auskuppeln der Kupplung (2) dient, vorgesehen ist.

2. Kupplungssystem gemäß Anspruch 1, wobei
das Verstellelement (3) ausgebildet ist, zumindest annähernd spielfrei zu sein.

3. Kupplungssystem gemäß Anspruch 2, wobei
das Verstellelement (3) zumindest ein erstes Federelement (7) aufweist, das ausgebildet ist, ein Spiel in einer Betätigungsrichtung in dem Verstellelement (3) zu verringern oder zu eliminieren.

4. Kupplungssystem gemäß einem der vorangehenden Ansprüche, wobei
das Wirkelement (5) ausgebildet ist, im betätigten Zustand direkt auf das Verstellelement (3) zu wirken.

5. Kupplungssystem gemäß Anspruch 4, wobei
das Schwingungsentkopplungsglied (6) entweder an dem Verstellelement (3) oder dem Wirkelement (5) ein Rohr (8) aufweist, wobei das Rohr (8) mit mindestens einer in der Rohrwand befindlichen sich axial erstreckendend radialen Nut (15) versehen ist, und das andere von dem Verstellelement (3) und dem Wirkelement (5) ein Nasenelement (16) aufweist, wobei das Nasenelement (16) eine in axialer Richtung spielbehaftet radial in die Nut (15) eingreifenden Nase (17) aufweist.

6. Kupplungssystem gemäß einem der Ansprüche 1 bis 3, wobei
das Schwingungsentkopplungsglied (6) ein Rohr (8), mit mindestens einem sich in der Rohrwand axial erstreckenden Langloch (9), und einen radialen Stift (10) aufweist,
wobei ein Inneres des Rohrs (8) zu dem Wirkelement (5) oder zu einem mit dem Verstellelement (3) verbundenen Verbindungselement komplementär ausgebildet ist, und
wobei der radiale Stift (10) vorgesehen ist, in das mindestens eine Langloch (9) einzugreifen.

7. Kupplungssystem gemäß Anspruch 6, wobei
das Rohr (8) zwei sich axial erstreckende und diametral gegenüber liegende Langlöcher (9) aufweist.

8. Kupplungssystem gemäß Anspruch 6 oder 7, wobei
das Langloch/die Langlöcher (9) und der Stift (10) ausgebildet sind, über ein direktes oder indirektes Anliegen des Stifts (10) an einem Ende des Langlochs/der Langlöcher (9) eine Kraft von der Aktuatorik (4) zu dem Verstellelement (3) zu übertragen.

9. Kupplungssystem gemäß einem der Ansprüche 6 bis 8, wobei
das Schwingungsentkopplungsglied (6) mit zumindest einem Flansch (11) versehen ist, und der zumindest eine Flansch (11) ausgebildet ist, über ein direktes oder indirektes Anliegen des Stifts (10) an dem zumindest einem Flansch (11), eine Kraft von der Aktuatorik (4) zu dem Verstellelement (3) zu übertragen.

10. Kupplungssystem gemäß einem der vorangehenden Ansprüche, wobei
mindestens ein zweites Federelement (12) in dem Schwingungsentkopplungsglied (6) vorgesehen ist, und das mindestens eine zweite Federelement (12) ausgebildet ist, die spielbehaftete Verbindung in der vorbestimmten Wirkrichtung (W, W') vorzuspannen.

11. Kupplungssystem gemäß einem der vorangehenden Ansprüche, wobei
mindestens ein dämpfendes Element (13) in dem Schwingungsentkopplungsglied (6) vorgesehen ist, und das mindestens eine dämpfende Element (13) ausgebildet ist, eine durch die spielbehaftete Verbindung ermöglichte Bewegung zu dämpfen.

12. Kupplungssystem gemäß einem der vorangehenden Ansprüche, wobei
ein Aktuator (14) der Aktuatorik (4) ein elektrischer Linearantrieb ist.

13. Kupplungssystem gemäß einem der Ansprüche 1 bis 11, wobei
ein Aktuator (14) der Aktuatorik (4) ein Hydraulikzylinder ist.

14. Kupplungssystem gemäß einem der Ansprüche 1 bis 11, wobei
ein Aktuator (14) der Aktuatorik (4) ein Pneumatikzylinder ist.

15. Kupplungssystem gemäß einem der vorangegangenen Ansprüche, wobei
das Schwingungsentkopplungssystem (1) dazu ausgebildet ist,
- in einem Fahrzeug, und/oder
- in einem Nutzfahrzeug
eingesetzt zu werden.

## Claims

1. Coupling system having
an oscillation decoupling system and
a coupling (2),
wherein
the oscillation decoupling system has
an actuating mechanism (4) with an active element (5) which is designed to carry out an active movement in a predetermined active direction (W, W') for actuating the adjustment element (3), and
an oscillation decoupling member (6) which connects the active element (5) of the actuating mechanism (4) and the adjustment element (3), wherein the vibration decoupling member (6) in the predetermined active direction (W, W') forms a play-afflicted connection which has a predetermined play range in which the active element (5) or the adjustment element (3) moves without the respective other element moving,
**characterised in that**
the adjustment element is provided as a disengaging mechanism for the coupling (2) for engaging and disengaging the coupling (2).

2. Coupling system according to claim 1, wherein
the adjustment element (3) is designed to be at least approximately play-free.

3. Coupling system according to claim 2, wherein
the adjustment element (3) has at least one first spring element (7) which is designed to reduce or to eliminate a play in an actuating direction in the adjustment element (3).

4. Coupling system according to any of the preceding claims, wherein
the active element (5) is designed to act in the actuated state directly on the adjustment element (3).

5. Coupling system according to claim 4, wherein
the vibration decoupling member (6) has a tube (8) either on the adjustment element (3) or the active element (5), wherein the tube (8) is provided with at least one radial groove (15) which is located in the tube wall and extends axially, and the other element of the adjustment element (3) and the active element (5) has a lug element (16), wherein the lug element (16) has a lug (17) engaging radially with the groove (15) in a play-afflicted manner in the axial direction.

6. Coupling system according to any of claims 1 to 3, wherein
the oscillation decoupling member (6) has a tube (8), with at least one elongated hole (9) extending axially in the tube wall, and a radial pin (10),
wherein an interior of the tube (8) is formed in a complementary manner with respect to the active element (5) or to a connecting element connected to the adjustment element (3), and
wherein the radial pin (10) is provided to engage with the at least one elongated hole (9).

7. Coupling system according to claim 6, wherein
the tube (8) has two axially extending and diametrically opposite elongated holes (9).

8. Coupling system according to claim 6 or 7, wherein
the elongated hole/the elongated holes (9) and the pin (10) are designed to transmit a force from the actuating mechanism (4) to the adjustment element (3) via the pin (10) lying directly or indirectly against one end of the elongated hole/the elongated holes (9).

9. Coupling system according to any of claims 6 to 8, wherein
the oscillation decoupling member (6) is provided with at least one flange (11), and the at least one flange (11) is designed to transmit a force from the actuating mechanism (4) to the adjustment element (3) via the pin (10) lying directly or indirectly against the at least one flange (11).

10. Coupling system according to any of the preceding claims, wherein
at least one second spring element (12) is provided in the oscillation decoupling member (6), and the at least one second spring element (12) is designed to preload the play-afflicted connection in the predetermined active direction (W, W').

11. Coupling system according to any of the preceding claims, wherein
at least one damping element (13) is provided in the oscillation decoupling member (6), and the at least one damping element (13) is designed to damp a movement permitted by the play-afflicted connection.

12. Coupling system according to any of the preceding claims, wherein
an actuator (14) of the actuating mechanism (4) is an electric linear drive.

13. Coupling system according to any of claims 1 to 11, wherein
an actuator (14) of the actuating mechanism (4) is a hydraulic cylinder.

14. Coupling system according to any of claims 1 to 11, wherein
an actuator (14) of the actuating mechanism (4) is a pneumatic cylinder.

15. Coupling system according to any of the preceding claims, wherein
the oscillation decoupling system (1) is designed to be used
- in a vehicle and/or
- in a commercial vehicle.

## Revendications

1. Système d'accouplement comprenant
un système de désaccouplement oscillant, et
un accouplement (2), dans lequel
le système de désaccouplement oscillant a
un élément (3) de réglage,
une actionique (4) ayant un élément (5) actif, qui est constitué pour exécuter une déplacement actif dans un sens (W, W') actif défini à l'avance pour l'actionnement de l'élément (3) de réglage, et
un organe (6) de désaccouplement oscillant, qui relie l'élément (5) actif de l'actionique (4) et l'élément (3) de réglage, dans lequel l'organe (6) de désaccouplement oscillant forme, dans le sens (W, W') actif défini à l'avance, une liaison avec jeu, qui a une plage de jeu définie à l'avance, dans laquelle l'élément (5) actif ou l'élément (3) de réglage se déplace sans que l'autre respectivement l'accompagne,
**caractérisé en ce que** l'élément (3) de réglage est prévu sous la forme d'un mécanisme de désenclenchement de l'accouplement (2), qui sert à l'accouplement et au désaccouplement de l'accouplement (2).

2. Système d'accouplement suivant la revendication 1, dans lequel
l'élément (3) de réglage est constitué pour être au moins à peu près sans jeu.

3. Système d'accouplement suivant la revendication 2, dans lequel
l'élément (3) de réglage a au moins un premier élément (7) de ressort, qui est constitué pour diminuer ou éliminer un jeu dans un sens d'actionnement dans l'élément (3) de réglage.

4. Système d'accouplement suivant l'une des revendications précédentes, dans lequel
l'élément (5) actif est constitué pour agir dans l'état actionné directement sur l'élément (3) de réglage.

5. Système d'accouplement suivant la revendication 4, dans lequel
l'organe (6) de désaccouplent oscillant a, soit sur l'élément (3) de réglage, soit sur l'élément (5) actif, un tube (8), dans lequel le tube (8) est pourvu d'au moins une rainure (15) radiale s'étendant axialement et se trouvant dans la paroi du tube, et l'autre de l'élément (3) de réglage et de l'élément (5) actif a un élément (16) de bec, dans lequel l'élément (16) de bec a un bec (17) pénétrant avec jeu dans une direction axiale radialement dans la rainure (15).

6. Système d'accouplement suivant l'une des revendications 1 à 3, dans lequel
l'organe (6) de désaccouplement oscillant a un tube (8), ayant au moins une boutonnière (9) s'étendant axialement dans la paroi du tube, et une broche (10) radiale,
dans lequel, un intérieur du tube (8) est constitué de manière complémentaire à l'élément (5) actif ou à un élément de liaison relié à l'élément (3) de réglage,
dans lequel il est prévu la broche (10) radiale, qui pénètre dans la au moins une boutonnière (9).

7. Système d'accouplement suivant la revendication 6, dans lequel
le tube (8) a deux boutonnières (9) s'étendant axialement et diamétralement en face l'un de l'autre.

8. Système d'accouplement suivant la revendication 6 ou 7, dans lequel
la boutonnière et/ou les boutonnières (9) et la broche (10) sont constituées, pour transmettre une force de l'actionique (4) à l'élément (3) de réglage par une application directe ou indirecte de la broche (10) à une extrémité de la boutonnière et/ou des boutonnières (9).

9. Système d'accouplement suivant la revendication 6 à 8, dans lequel
l'organe (6) de désaccouplement oscillant est pourvu d'au moins une bride (11) et la au moins une bride (11) est constituée, pour transmettre une force de l'actionique (4) à l'élément (3) de réglage par une application directe ou indirecte de la broche (10) à la au moins une bride (11).

10. Système d'accouplement suivant l'une des revendications précédentes, dans lequel
il est prévu au moins un deuxième élément (12) de ressort dans l'organe (6) de désaccouplement oscillant, et le au moins un deuxième élément (12) de ressort est constitué pour précontraindre la liaison ayant du jeu dans le sens (W, W') d'action défini à l'avance.

11. Système d'accouplement suivant l'une des revendications précédentes, dans lequel
il est prévu au moins un élément (13) d'amortissement dans l'organe (6) de désaccouplement oscillant et le au moins un élément (13) d'amortissement amorti un mouvement rendu possible par la liaison avec jeu.

12. Système d'accouplement suivant l'une des revendications précédentes, dans lequel
un actionneur (14) de l'actionique (4) est un entraînement électrique linéaire.

13. Système d'accouplement suivant l'une des revendications 1 à 11, dans lequel
un actionneur (14) de l'actionique (4) est un vérin hydraulique.

14. Système d'accouplement suivant l'une des revendications 1 à 11, dans lequel
un actionneur (14) de l'actionique (4) est un vérin pneumatique.

15. Système d'accouplement suivant l'une des revendications précédentes, dans lequel
le système (1) de désaccouplement oscillant est constitué pour être mis
- dans un véhicule, et/ou
- dans un véhicule utilitaire.
